# EUROPEAN PATENT APPLICATION

(11) **EP 1 667 250 A1**
(43) Date of publication of application: **07.06.2006**
(21) Application number: 04733112.9
(22) Date of filing: 14.05.2004
(51) Int. Cl.: H01M 2/02

(54) **BATTERY CASE-USE SURFACE-TREATED STEEL SHEET, BATTERY CASE AND BATTERY USING IT**

(30) Priority: 13.08.2003 JP 2003293085
(71) Applicant: Toyo Kohan Co., Ltd., Tokyo 102-8447 (JP)
(72) Inventor: TOMOMORI, Tatsuo, c/o TOYO KOHAN CO., LTD., Kudamatsu-shi, Yamaguchi 744-8611 (JP); HONDA, Yoshitaka, c/o TOYO KOHAN CO., LTD., Kudamatsu-shi, Yamaguchi 744-8611 (JP); YAMANE, Eiji, c/o TOYO KOHAN CO., LTD., Kudamatsu-shi, Yamaguchi7 44-8611 (JP); OKAMATSU, Eiji, c/o TOYO KOHAN CO., LTD., Kudamatsu-shi, Yamaguchi 744-8611 (JP); OHMURA, Hitoshi, c/o TOYO KOHAN CO., LTD., Kudamatsu-shi, Yamaguchi 744-8611 (JP)
(74) Representative: Vossius & Partner
(86) International application number: PCT/JP2004/006528
(87) International publication number: WO 2005/018021

(57) **Abstract**

A bakery case-use surface-treated steel sheet excellent in battery performance, a battery case and a battery using it. The battery case is obtained by forming, on the Surface corresponding to a battery case of a inner surface of a steel sheet to be plated a surface-treated steel sheet having a nickel-plated layer as a lower layer and a nickel-phosphorus alloy plated layer or a nickel-cobalt-phosphorus alloy plated layer as an upper layer by a deep drawing method, a DI (drawing and ironing) method or a DTR (drawing thin and redraw) method.

## Description

### TECHNICAL FIELD

The present invention relates to a surface-treated steel sheet for battery cases, battery cases and batteries made by using the same.

### BACKGROUND ART

Apost-plating method in which a cold rolled steel sheet is press worked and subjected to barrel plating, or a pre-plating method in which a nickel-plated steel sheet is press worked to form a battery case has hitherto been employed for a battery case filled with a strong alkali solution, such as for an alkaline-manganese battery, which is a primary battery, a nickel-cadmium battery, which is a secondary battery, or a nickel-hydrogen battery expected recently to have an increased demand as a new secondary battery, and many proposals for improvements have so far been made, and we, the inventors of the present invention, have also proposed an excellent surface-treated steel sheet for a battery case having a low internal resistance (see, for example, Patent Literature 1).

Moreover, a DI (drawing and ironing) method has recently come to be employed as a method of press forming a battery case and as a method of realizing a thickness reduction to achieve an increase in battery capacity by replacing a multi-stage deep drawing method (see, for example, Patent Literature 2). The DI method and a DTR (drawing thin and redraw) method make it advantageously possible to realize a smaller thickness for the side wall of a case than for its bottom, thereby pack it with more cathode and anode active materials and achieve an increase in battery capacity, while also achieving an improvement in the pressure withstanding strength of the battery owing to the thick bottom of the case.
Patent Literature 1: International Publication No. 95/11527 Brochure
Patent Literature 2: JP-B-Hei 7-99686

### DISCLOSURE OF THE INVENTION

### PROBLEMS TO BE SOLVED BY THE INVENTION

The DI and DTR methods are methods which are effective for an increase in battery capacity as stated above, but as regards formability, they have a disadvantageous aspect in continuous formability due to the high deformation resistance of the material as compared with the customary multistage deep drawing method.

Moreover, the alkaline-manganese battery has recently come to be required to have an excellent performance as in internal resistance, short-circuit current and discharge characteristics.
A battery case made by the deep drawing, DI or DTR method has an inner surface layer formed by a nickel or iron-nickel layer to realize a good battery performance, but its battery performance is limited and improvements are desired.

The present invention has a technical object in providing a battery case permitting an excellent battery performance and a surface-treated steel sheet which is suitable for use in manufacturing such a battery case.

### MEANS FOR SOLVING THE PROBLEMS

We, the inventors of the present invention, have found that a battery case made by the deep drawing, DI or DTR method exhibits an excellent battery performance as in internal resistance, short-circuit current, etc. if the inner surface of the can carries a nickel-phosphorus alloy plating layer thereon.
The surface-treated steel sheet for a battery case as set forth in claim 1 is characterized by having a nickel-phosphorus alloy plating layer formed on its surface which will define the inner surface of the battery case.
The surface-treated steel sheet for a battery case as set forth in claim 2 is characterized by having a nickel plating layer formed as an under layer and a nickel-phosphorus alloy plating layer formed as a top layer on its surface which will define the inner surface of the battery case.
The surface-treated steel sheet for a battery case as set forth in claim 3 is characterized by having an iron-nickel diffusion layer formed as an under layer and a nickel-phosphorus alloy plating layer formed as a top layer on its surface which will define the inner surface of the battery case.
The surface-treated steel sheet for a battery case as set forth in claim 4 is characterized by having an iron-nickel diffusion layer formed as an under layer, a nickel layer formed as an intermediate layer and a nickel-phosphorus alloy plating layer formed as a top layer on its surface which will define the inner surface of the battery case.
The nickel-phosphorus alloy plating layer preferably has a thickness in the range of 0.1 to 2 µm. The nickel-phosphorus alloy plating layer preferably has a phosphorus content in the range of 1 to 12% by weight. Moreover, the nickel-phosphorus alloy plating layer preferably contains 5 to 70% by weight of cobalt.

The battery case as set forth in claim 8 is characterized by having a nickel-phosphorus alloy plating layer formed on its inner surface.
The battery case as set forth in claim 9 is characterized by having a nickel plating layer formed as an under layer and a nickel-phosphorus alloy plating layer formed as a top layer on its inner surface.
The battery case as set forth in claim 10 is characterized by having an iron-nickel diffusion layer formed as an under layer and a nickel-phosphorus alloy plating layer formed as a top layer on its inner surface.
The battery case as set forth in claim 11 is characterized by having an iron-nickel diffusion layer formed as an under layer, a nickel layer as an intermediate layer and a nickel-phosphorus alloy plating layer formed as a top layer on its inner surface.
The nickel-phosphorus alloy plating layer preferably has a phosphorus content in the range of 1 to 12% by weight. Moreover, the nickel-phosphorus alloy plating layer preferably contains 5 to 70% by weight of cobalt.
The battery case as set forth in claim 14 is a battery case as set forth in any of claims 8 to 13 and formed by a deep drawing, DI or DTR method.
The battery as set forth in claim 15 is characterized by employing a battery case as set forth in any of claims 8 to 14 and packing its interior with cathode and anode active materials.

### BEST MODE OF CARRYING OUT THE INVENTION

The surface-treated steel sheet of the present invention will now be described.

### (Steel Sheet)

Low-carbon aluminum-killed steel is usually preferably employed for a black sheet. Non-aging ultra-low-carbon steel containing niobium, boron and titanium is also employed. A cold-rolled, electrolytically cleaned, annealed and temper rolled steel strip is usually employed as a black sheet.

### (Nickel Plating)

Lusterless nickel plating was performed by using a sulfate bath as described below. A plating thickness in the range of 0.5 to 3 µm is preferable on a surface supposed to define the inner surface of a case. If it is less than 0.5 µm, a large amount of iron is dissolved and makes a battery of low performance. It may exceed 3 µm, but is too thick to be economical. A range of 0.2 to 3 µm is preferable on its outer surface. If it is less than 0.2 µm, its corrosion resistance is so low that rust forms easily. It may exceed 3 µm, but is too thick to be economical.

| Bath Composition: | |
|---|---|
| Nickel sulfate (NiSO₄ · 6H₂O) | 300 g/l |
| Nickel chloride (NiCl₂ · 6H₂O) | 45 g/l |
| Boric acid (H₃BO₃) | 30 g/l |
| Bath pH: 4 (adjusted with sulfuric acid) | |
| Stirring: Air stirring | |
| Bath temperature: 60°C | |
| Anode: Used was one prepared by charging S pellets (name of a product of INCO, spherical) in a titanium basket and enclosing it in a polypropylene bag. | |

A plating bath as described below is used for semi-lustrous nickel plating. Semi-lustrous nickel plating may be substituted for the lusterless nickel plating as first described.

### (Semi-lustrous Nickel Plating)

Semi-lustrous nickel plating was performed by adding a polyoxy-ethylene adduct of unsaturated alcohol and unsaturated carboxylic acid formaldehyde appropriately to a nickel sulfate bath as a semi-lustrous agent. The range of a plating thickness may be equal to that of the lusterless nickel plating as described above.

| Bath Composition: | |
|---|---|
| Nickel sulfate (NiSO₄ · 6H₂O) | 300 g/l |
| Nickel chloride (NiCl₂ · 6H₂O) | 45 g/l |
| Boric acid (H₃BO₃) | 30 g/l |
| Polyoxy-ethylene adduct of unsaturated alcohol | 3.0 g/l |
| Unsaturated carboxylic acid formaldehyde | 3.0 g/l |
| Bath pH: 4 (adjusted with sulfuric acid) | |
| Stirring: Air stirring | |
| Bath temperature: 60°C | |
| Anode: Used was one prepared by charging S pellets (name of a product of INCO, spherical) in a titanium basket and enclosing it in a polypropylene bag. | |

### (Diffusion Treatment)

Diffusion treatment by heat treatment may be performed after the plating as described above. Diffusion treatment is preferably performed in a non-oxidizing or reducing atmosphere and may be performed in, for example, a non-oxidizing atmosphere containing 5% of hydrogen, the rest thereof being nitrogen. Diffusion treatment may be performed by using known equipment, such as a box type annealing furnace or a continuous annealing furnace. Diffusion treatment is performed in a temperature range of 300°C to 800°C. A temperature range of 350°C to 800°C is more preferable. It may be continued for a period of time allowing the underlying nickel plating layer to turn wholly into an iron-nickel alloy layer, or remain partly as a nickel plating layer.

### (Nickel-Phosphorus Alloy Plating)

Nickel-phosphorus alloy plating is effected on one side of the steel sheet which has been plated with nickel, or subjected to diffusion treatment after nickel plating, as described above. The nickel plating is lusterless or semi-lustrous nickel plating. Any known plating bath, such as a vat, sulfamate or chloride bath, may be used as a bath for nickel-phosphorus alloy plating according to the present invention.

The nickel-phosphorus alloy plating preferably has a thickness in the range of 0.1 to 2 µm. If it is less than 0.1 µm, the presence of a large number of pinholes in a nickel-phosphorus alloy plating layer undesirably promotes the dissolution of iron (from the steel sheet) in the alkaline electrolyte of the battery and the formation of iron oxides. It may exceed 2 µm, though uneconomically.

Referring to the growth of nickel-phosphorus alloy plating, nickel-phosphorus alloy plating is performed by adding phosphorous acid into a vat. According to a specific example, the amount of phosphorus precipitated in a nickel layer is adjusted by adding phosphorous acid in the range of 5 to 20 g/l in terms of H₃PO₃ to 250 g/l nickel sulfate (6H₂O), 45 g/l nickel chloride and 30 g/l boric acid. A bath temperature of 40°C to 70°C and a pH of 1.5 to 2.5 are preferable. The plating layer preferably has a thickness of 0.1 to 2 µm.

### (Nickel-Cobalt-Phosphorus Alloy Plating)

Nickel-cobalt-phosphorus alloy plating is effected on one side of the steel sheet on which lusterless or semi-lustrous nickel plating has been performed as described above. Any known plating bath, such as a vat, sulfamate or chloride bath, may be used as a bath for nickel-cobalt-phosphorus alloy plating according to the present invention.

The nickel-cobalt-phosphorus alloy plating preferably has a thickness in the range of 0.1 to 2 µm. If it is less than 0.1 µm, the presence of a large number of pinholes in a nickel-cobalt-phosphorus alloy plating layer undesirably promotes the dissolution of iron (from the steel sheet) in the alkaline electrolyte of the battery and the formation of iron oxides. It may exceed 2 µm, though uneconomically.

Referring to the growth of nickel-cobalt-phosphorus alloy plating, nickel-cobalt-phosphorus alloy plating is performed by adding phosphorous acid into a vat. According to a specific example, the amounts of phosphorus and cobalt precipitated in a nickel layer are adjusted by adding 1 to 100 g/l cobalt sulfate and phosphorous acid in the range of 5 to 20 g/l in terms of H₃PO₃ to 250 g/l nickel sulfate (6H₂O), 45 g/l nickel chloride and 30 g/l boric acid. A bath temperature of 40°C to 70°C and a pH of 1. 5 to 2 . 5 are preferable. The plating layer preferably has a thickness of 0.1 to 2 µm.

### EXAMPLES

The present invention will now be described in further detail based on examples.

### [Examples 1 to 10 and Comparative Examples 1 to 4]

Cold rolled and annealed low-carbon aluminum-killed steel sheets were used as black sheets. The chemical composition of the steel of the black sheets was as follows:
C: 0.04% (% is on a weight basis throughout the following description)., Mn: 0.19%, Si: 0.01%, P: 0.012%, S: 0.009%,
Al: 0.064%, N: 0.0028%

The steel sheets were subjected to alkaline electrolytic degreasing under the following conditions:

### (Alkaline Electrolytic Degreasing)

Electrolytic Conditions:
Bath composition: Caustic soda, 30 g/l
Current density: 5 A/dm² (anodic treatment) for 10 seconds;
5 A/dm² (cathodic treatment) for 10 seconds;
Bath temperature: 70°C.
Then, after sulfuric acid cleaning (sulfuric acid 50 g/l, bath temperature 30°C, 20 seconds of immersion), the steel sheets according to the Examples of the present invention had lusterless or semi-lustrous nickel plating performed on both sides, and nickel-phosphorus or nickel-cobalt-phosphorus alloy plating performed on their sides supposed to define the inner surfaces of battery cases, under the conditions shown in Table 1. As regards Comparative Examples, lusterless or semi-lustrous nickel plating was performed on both sides of the steel sheets under the conditions shown in Table 1, but no nickel-phosphorus or nickel-cobalt-phosphorus alloy plating was performed thereon. As regards Comparative Examples 1 and 2, diffusion treatment by heat treatment was performed under the conditions shown in Table 1 after plating. Referring to nickel plating, lusterless nickel plating was employed by Examples 3 to 6 and Comparative Examples 2 and 3, and semi-lustrous nickel plating by the rest.

### (Preparation of Battery Cases)

The formation of a battery case by the DI method was carried out by employing a steel sheet having its surface treated as described above and having a thickness of 0.38 mm, forming a cup having a diameter of 20.5 mm from a blank having a diameter of 41 mm and subjecting it to redrawing and two stages of ironing by a DI machine to form a case having an outside diameter of 13.8 mm, a wall thickness of 0.20 mm and a height of 56 mm. Finally, it was trimmed at its top to make an LR6 battery case having a height of 49.3 mm. The DI method was carried out by employing the surface-treated steel sheets according to Examples 1 to 3 and Comparative Examples 1 and 4.
The formation of a battery case by the DTR method was carried out by employing a surface-treated steel sheet having a thickness of 0.25 mm, punching a blank having a diameter of 58 mm therefrom and repeating its drawing and redrawing several times to form an LR6 battery case having an outside diameter of 13.8 mm, a wall thickness of 0.20 mm and a height of 49.3 mm. The DTR method was carried out by employing the surface-treated steel sheets according to Examples 4 to 6 and Comparative Example 2.
Moreover, the formation of a battery case by the deep drawing method was carried out by employing a plated steel sheet having a thickness of 0.25 mm, punching a blank having a diameter of 57 mm therefrom and repeating its drawing and redrawing several times to form an LR6 battery case having an outside diameter of 13.8 mm, a wall thickness of 0.25 mm and a height of 49.3 mm. The deep drawing method was carried out by employing the surface-treated steel sheets according to Examples 7 to 10 and Comparative Example 3.

### (Manufacture of Batteries)

The formation of the battery case as described above was followed by the manufacture of size AA (LR-6) alkaline-manganese batteries as described below.
A cathode combination was first prepared by taking manganese dioxide and graphite in a weight ratio of 10:1 and admixing potassium hydroxide (8 moles) therewith. Then, the cathode combination was pressed in a mold to form a donut-shaped pellet of the cathode combination having a predetermined size and it was press fitted in a battery case. Then, an anode plate having an anode current collector welded thereto was mounted in the battery case.
Then, a separator formed from a nonwoven fabric of vinylon was inserted along the inner periphery of the pellet fitted in the battery case and an anode gel composed of potassium hydroxide saturated with zinc particles and zinc oxide was put in the battery case. Moreover, an insulating gasket was attached to the anode plate and it was fitted in the battery case and swaged to make a complete alkaline-manganese battery.

The batteries made as described were evaluated for their battery performance as will be explained below. The results are shown in Table 1.

**[Table 1]**

| Example or Comparative Example | | Inner surface of battery case | | | | Outer surface of battery case | Heat treatment after Ni plating | Battery characteristics | | |
|---|---|---|---|---|---|---|---|---|---|---|
| | | Ni plating | Ni-P or Ni-Co-P alloy plating | | | Ni plating | | IR (mΩ) | SCC (A) | Discharge characteristics (min.) |
| | | Ni (g/m²) | Ni (g/m²) | P (%) | Co (%) | Ni (g/m²) | | | | |
| Example | 1 | 4.2 | 0.8 | 1.0 | - | 18.4 | - | 156 | 7.5 | 15.6 |
| | 2 | 8.9 | 2.5 | 4.3 | - | 17.3 | - | 152 | 7.8 | 16.0 |
| | 3 | 17.7 | 4.8 | 7.5 | - | 17.7 | - | 149 | 7.9 | 17.0 |
| | 4 | 17.0 | 8.5 | 11.7 | - | 1.7.9 | - | 143 | 8.2 | 17.4 |
| | 5 | 4.2 | 1.1 | 1.2 | 5.2 | 27.4 | - | 152 | 7.8 | 15.9 |
| | 6 | 8.9 | 2.7 | 3.5 | 9.9 | 27.0 | - | 145 | 8.1 | 16.4 |
| | 7 | 17.7 | 4.5 | 9.4 | 18.6 | 8.8 | - | 143 | 8.3 | 17.7 |
| | 8 | 17.0 | 8.8 | 11.3 | 28.3 | 9.3 | - | 138 | 8.7 | 18.4 |
| | 9 | 8.9 | 2.7 | 3.5 | 43.6 | 27.0 | - | 135 | 9.1 | 18.9 |
| | 10 | 8.9 | 2.7 | 3.5 | 68.5 | 27.0 | - | 134 | 9.2 | 19.1 |
| Comparative Example | 1 | 4.4 | - | - | - | 17.6 | 550°C × 1 h | 158 | 6.6 | 13.9 |
| | 2 | 8.9 | - | - | - | 27.1 | 780°C × 1 min | 170 | 5.4 | 13.1 |
| | 3 | 7.6 | - | - | - | 17.3 | - | 159 | 6.3 | 14.0 |
| | 4 | 17.8 | - | - | - | 18.2 | - | 161 | 6.5 | 14.5 |

### [Evaluation for Internal Resistance (IR)]

After the batteries had been left to stand at 80°C for three days, their internal resistance (IR) was determined by the alternating-current impedance method. A smaller value of internal resistance indicates a better characteristic.

### [Evaluation for Short-Circuit Current (SCC)]

After the batteries had been left to stand at 80°C for three days, a closed circuit was formed by connecting an ammeter to each battery and the current of the battery was measured as its short-circuit current (SCC). A higher short-circuit current indicates a better characteristic.

### [Discharge Characteristic]

After the batteries had been left to stand at 80°C for three days, a discharge time was measured by discharging each battery at a fixed current of 1 A until 0.9 V and was taken as its discharge characteristic. A longer discharge time indicates a better characteristic.

### INDUSTRIAL APPLICABILITY

The battery case formed by the deep drawing, DI or DTR method and having a diffused layer of a nickel-phosphorus or nickel-cobalt-phosphorus alloy as the outermost layer of its inner surface provides a good battery performance (internal resistance, short-circuit current and discharge characteristics) as compared with any known battery case having a nickel or nickel-iron layer on its inner surface.

## Claims

**1.** A surface-treated steel sheet for a battery case, **characterized by** having a nickel-phosphorus alloy plating layer formed on its surface which will define the inner surface of the battery case.

**2.** A surface-treated steel sheet for a battery case, **characterized by** having a nickel plating layer formed as an under layer and a nickel-phosphorus alloy plating layer formed as a top layer on its surface which will define the inner surface of the battery case.

**3.** A surface-treated steel sheet for a battery case, **characterized by** having an iron-nickel diffusion layer formed as an under layer and a nickel- phosphorus alloy plating layer formed as a top layer on its surface which will define the inner surface of the battery case.

**4.** A surface-treated steel sheet for a battery case, **characterized by** having an iron-nickel diffusion layer formed as an under layer, a nickel layer formed as an intermediate layer and a nickel-phosphorus alloy plating layer formed as a top layer on its surface which will define the inner surface of the battery case.

**5.** A surface-treated steel sheet for a battery case as set forth in any of claims 1 to 4, wherein the nickel-phosphorus alloy plating layer has a thickness in the range of 0.1 to 2 µm.

**6.** A surface-treated steel sheet for a battery case as set forth in any of claims 1 to 5, wherein the nickel-phosphorus alloy plating layer has a phosphorus content in the range of 1 to 12% by weight.

**7.** A surface-treated steel sheet for a battery case as set forth in any of claims 1 to 6, wherein the nickel-phosphorus alloy plating layer contains 5 to 70% by weight of cobalt.

**8.** A battery case **characterized by** having a nickel-phosphorus alloy plating layer formed on its inner surface.

**9.** A battery case **characterized by** having a nickel plating layer formed as an under layer and a nickel-phosphorus alloy plating layer formed as a top layer on its inner surface.

**10.** A battery case **characterized by** having an iron-nickel diffusion layer formed as an under layer and a nickel-phosphorus alloy plating layer formed as a top layer on its inner surface.

**11.** A battery case **characterized by** having an iron-nickel diffusion layer formed as an under layer, a nickel layer as an intermediate layer and a nickel-phosphorus alloy plating layer formed as a top layer on its inner surface.

**12.** A battery case as set forth in any of claims 8 to 11, wherein the nickel-phosphorus alloy plating layer has a phosphorus content in the range of 1 to 12% by weight.

**13.** A battery case as set forth in any of claims 8 to 12, wherein the nickel-phosphorus alloy plating layer contains 5 to 70% by weight of cobalt.

**14.** A battery case as set forth in any of claims 8 to 13, and formed by a deep drawing, DI or DTR method.

**15.** A battery **characterized by** employing a battery case as set forth in any of claims 8 to 14 and packing its interior with cathode and anode active materials.
